# EUROPÄISCHE PATENTANMELDUNG

(11) **EP 0 531 657 A2**
(43) Veröffentlichungstag der Anmeldung: **17.03.1993**
(21) Anmeldenummer: 92111797.4
(22) Anmeldetag: 10.07.1992
(51) Int. Cl.: B01D 46/04

(54) **Verfahren zur Abreinigung von Staub von den Aussenseiten von Filterelementen und Vorrichtung zur Durchführung des Verfahrens**

(30) Priorität: 13.07.1991 DE 4123257
(71) Anmelder: L. & C. Steinmüller GmbH, D-51641 Gummersbach (DE)
(72) Erfinder: Pitt, Reinhold U., Dr.-Ing., W-5100 Aachen (DE)
(74) Vertreter: Carstens, Wilhelm, Dipl.-Phys.

(57) **Zusammenfassung**

Bei dem Verfahren zur Abreinigung von Staub von der Außenseite mindestens eines hohlen länglichen Filterelementes (1) mit einem zu einem freien Raum offenen Ende und einem geschlossenen Ende, mit dem staubhaltiges Gas entstaubt wird, wobei das für das Gas durchlässige Filterelement (1) von außen nach innen von dem Gas durchströmt wird und der Staub auf der Außenseite des Filterelementes abgelagert wird und der abgelagerte Staub durch einen auf die Innenseite des Filterelementes aufgebrachten Gasimpuls eines durch das offene Ende des Filterelementes (1) eingebrachten Treibgasstrahls abgereinigt wird, der von einer in dem freien Raum angeordneten Treibstrahleinrichtung (17) mit einer auf das offene Ende des Filterelementes ausgerichteten Mündung ausgeht, und wobei vom Treibgasstrahl staubfreies Gas aus dem freien Raum angesaugt wird, ist zur Verbesserung des Verfahrens durch Aufgabe eines für die Abreinigung genügend großen gleichmäßig auf die Innenseite des Filterelementes verteilten Druckgasimpuls vorgesehen, daß der Treibgasstrahl mit dem angesaugten staubfreien Gas nach Eintritt in das Filterelement (1) mittels eines in das offene Ende des Filterelementes hineinragenden rohrartigen Einbaus (11) zunächst über eine vorgegebene Strecke geführt und danach in eine Vielzahl auf die Innenseite des Filterelementes gerichtete Teilströme aufgeteilt wird.

## Beschreibung

Die Erfindung betrifft ein Verfahren zur Abreinigung von Staub von der Außenseite mindestens eines hohlen länglichen Filterelementes mit einem zu einem freien Raum offenen Ende und einem geschlossenen Ende, mit dem staubhaltiges Gas entstaubt wird, wobei das für das Gas durchlässige Filterelement von außen nach innen von dem Gas durchströmt wird und der Staub auf der Außenseite des Filterelementes abgelagert wird und der abgelagerte Staub durch einen auf die Innenseite des Filterelementes aufgebrachten Gasimpuls eines durch das offene Ende des Filterelementes eingebrachten Treibgasstrahls abgereinigt wird, der von einer in dem freien Raum angeordneten Treibstrahleinrichtung mit einer auf das offene Ende des Filterelementes ausgerichteten Mündung ausgeht, und wobei vom Treibgasstrahl ein staubfreies Gas aus dem freien Raum angesaugt wird.

Ein solches Abreinigungsverfahren von Filterelementen wird beispielsweise bei der Reinigung von staubbeladenen Rauchgasen von aufgeladenen oder atmosphärischen Wirbelschichtfeuerungen eingesetzt.

Aus der DE-OS 37 18 846 ist ein Verfahren zum Entstauben eines staubhaltigen Gases mittels für das Gas durchlässiger hohler länglicher Filterelemente bekannt. Die in einem Filtergehäuse parallel an einer Tragplatte zusammengefaßten Filterelemente werden von einem staubhaltigen Gas angeströmt, wobei das Gas die Filterelemente von außen nach innen durchströmt und der Staub auf den Außenseiten der Filterelemente eine Staubschicht bildet. Zur Abreinigung der Staubschicht an den einzelnen Filterelementen ist über jedem Filterelement eine Düse angebracht, von der jeweils ein Treibgasstrahl durch das offene Ende des jeweiligen Filterelementes in das Filterelement aufgegeben wird. Durch den so erzeugten Gasimpuls auf die Innenseiten der Filterelemente soll die Staubschicht auf deren Außenseiten möglichst vollständig abgereinigt werden.

Bei dem bekannten Verfahren ist es von Nachteil, daß durch die Saugwirkung des Treibgasstrahls nach Eintritt in das jeweilige Filterelement, insbesondere im Bereich des Eintritts, an der Innenseite des jeweiligen Filterelementes ein Unterdruck gegenüber dem Druck auf der Außenseite des Filterelementes erzeugt wird, wodurch beim Abreinigungsvorgang staubbeladenes Gas angesaugt wird und sich weiterer Staub auf die Außenseite des jeweiligen Filterelementes ablagert oder der Gasimpuls auf die Innenseite nicht groß genug ist, um die Zusammenhaltekräfte der die Staubschicht auf der Außenseite bildenden Staubkörner zu überwinden und die Staubschicht von der Außenfläche zu lösen. Es ist weiterhin von Nachteil, daß beim Aufbringen des Gasimpulses auf die Innenseite des Filterelementes bereichsweise Gebiete mit intensiver Gasbewegung entstehen, durch die, insbesondere bei Filtermaterialien mit teilweiser Tiefenfiltration, nahe der Innenseite des Filterelementes eingelagerte Staubkörner relativ zum Filtermaterial heftig bewegt werden und dadurch das Filtermaterial im Laufe der Zeit beschädigen oder gar abtragen.

Es ist die Aufgabe der vorliegenden Erfindung, das gattungsgemäße Verfahren derart zu verbessern, daß ein für die Abreinigung genügend großer gleichmäßig auf die Innenseite des Filterelementes verteilter Gasimpuls aufgegeben wird.

Die Aufgabe wird dadurch gelöst, daß der Treibgasstrahl mit dem angesaugten staubfreien Gas nach Eintritt in das Filterelement mittels eines in das offene Ende des Filterelementes hineinragenden rohrartigen Einbaus zunächst über eine vorgegebene Strecke geführt und danach in eine Vielzahl auf die Innenseite des Filterelementes gerichtete Teilströme aufgeteilt wird. Durch die Führung des Treibgasstrahls mit dem angesaugten Reingases, ausgehend vom offenen Ende des Filterelementes in das Filterelement, wird der Strahl nach Eintritt in das Filterelement davon abgehalten, staubbeladenes Gas auf die Außenseite des Filterelementes anzusaugen, wodurch zusätzliche Staubablagerungen bzw. eine für die Abreinigung unzureichend große Impulsaufgabe auf die Innenfläche des Filterelementes vermieden wird. Durch die Aufteilung des geführten Treibgasstrahls in eine Vielzahl auf die Innenfläche des Filters gerichtete Teilströme wird ein kontrollierter und gleichmäßig auf die Innenseite des Filterelementes verteilter Gasimpuls erreicht, der groß genug ist, um die die Staubschicht an der Außenseite festhaltenden Kohäsion- und Adhäsionskräfte zu überwinden.

Durch die Aufteilung des Treibgasstrahls in viele Teilströme werden zudem Gebiete mit intensiverer Gasbewegung im Inneren des Filterelementes im wesentlichen vermieden, wodurch die Gefahr der Beschädigung des Filtermaterials, insbesondere eines solchen mit teilweiser Tiefenfiltration, erheblich gensenkt wird. Durch den Saugeffekt des Treibgasstrahls wird staubfreies Gas im wesentlichen aus dem freien Raum außerhalb des Filterelementes in das Filterelement gesaugt, wodurch die Masse des abreinigenden Gasimpulses erhöht wird.

Als geschlossenes Ende eines Filterelementes ist sowohl ein gasdicht geschlossenes Ende als auch ein gasdurchlässig geschlossenes Ende aus gasdurchlässigem Filtermaterial zu verstehen, wobei das Verfahren mit besonderem Vorteil bei Filterelementen mit geschlossenem Boden eingesetzt wird.

Es ist weiterhin von Vorteil, daß die Düsenaustrittsgeschwindigkeit des Treibgasstrahls mindestens den Wert der Schallgeschwindigkeit erreicht. Durch Erhöhung der Strahlgeschwindigkeit und Erhöhung der Gasmasse des Strahls während einer Impulsaufgabe, wird der Impuls vergrößert.

Die Abreinigung kann weiter dadurch verbessert werden, daß ein pulsierender Treibgasstrahl aufgegeben wird. Dabei ist der Impulsstrom des Treibgasstrahls in mehrere Teilimpulsströme zerlegt. Die Pulsation des Gasstrahls wird mittels eines in Strömungsrichtung des Gases der Mündung vorgeschalteten schnell öffnenden und schließenden Absperrorgans erzeugt, wobei es während eines Reinigungsvorganges zu mehreren von einem Strahl ausgehenden Gasimpulsen auf die Innenseite des Filterelementes kommt. Durch die Pulsation des Treibgasstrahls wird der Anteil des Überschallbetriebes vergrößert.

Eine weitere Verbesserung des Verfahrens wird dadurch erreicht, daß die vom Gasimpuls ausgehende Druckwelle im Inneren des Filterelementes mittels einer das offene Ende des Filterelementes zumindest teilweise abschließenden Schicht reflektiert wird. Dadurch wird bei sehr kurzen Impulsen eines Strahls, insbesondere während der allerersten Phase der Abreinigung, eine weitere Vergleichmäßigung der Impulsbeaufschlagung der Innenseite des Filterelementes erreicht.

Die Erfindung richtet sich auch auf eine Vorrichtung zur Abreinigung von Staub von der Außenseite mindestens eines hohlen länglichen Filterelementes mit einem offenen und einem geschlossenen Ende und einer gasdurchlässigen Filterelementwand mit mindestens einer in einem freien Raum vor dem offenen Ende angeordneten Treibgasstrahleinrichtung mit einer auf das offene Ende gerichteten und koaxial zur Filterelementwand ausgerichteten Mündung.

Erfindungsgemäß ist dabei vorgesehen, daß ein an beiden Enden offener rohrartiger Einbau in das offene Ende des Filterelementes hineinragend und koaxial in einem Abstand zur Filterelementwand angeordnet ist, wobei der Einbau ausgehend von seinem der Mündung zugewandten Ende längs eines ersten Abschnitts gasdicht geschlossen ist und längs eines daran anschließenden zweiten Abschnittes perforiert ist.

Der gasdicht geschlossene Abschnitt des Einbaus dient dazu, Unterdruckbereiche auf der Innenseite des Filterelementes zu vermeiden. Der perforierte Abschnitt des Einbaus wirkt als Diffusor, in dem der statische Druck zu dessen freien Ende hin auf den zum Abreinigen erforderlichen Wert ansteigt.

Wird aus dem freien Raum vor dem Filterelement ein heißes das Filterelement als staubfreies Gas verlassendes Gas von einem kalten Treibgasstrahl angesaugt, wobei die Außenseite des Filterelementes von einem heißen Rohgasstrom beaufschlagt ist, dient der geschlossene Abschnitt des Einbaus auch dazu, das staubfreie Gas mit dem Treibgas intensiv zu mischen, so daß ein Strahl mit gegenüber dem Temperaturniveau des von der Mündung ausgehenden Treibgases höheren Temperaturniveaus zur Abreinigung zur Verfügung steht. Dadurch kann eine Thermoschockbeanspruchung und die Gefahr der damit verbundenen Beschädigung des Filtermaterials verringert werden.

Eine vorteilhafte Ausgestaltung der Abreinigungsvorrichtung besteht darin, daß der gasdicht geschlossene Abschnitt des Einbaus zwei- bis dreimal so lang ist wie dessen lichte Weite. Dadurch ist zum einen gewährleistet, daß bei vorgegebener lichter Weite des Einbaus eine für die Vermischung des Treibgases mit dem angesaugten staubfreien Gas ausreichend lange Mischstrecke vorhanden ist. Zum anderen ist die Länge des Einbaus ausreichend lang, damit sich der Strahl an der Innenseite des gasundurchlässigen Abschnitts anlehnen und hinsichtlich seines Strömungsprofils vergleichmäßigen kann.

Eine weitere vorteilhafte Ausgestaltung ist dadurch zu erreichen, daß längs des perforierten Abschnittes die perforierte Fläche zu dessen freien Ende abnimmt. Durch die abnehmende Gasdurchlässigkeit zum freien Ende des perforierten Abschnitts wird die Impulsverteilung über die Innenseite des Filterelementes weiter vergleichmäßigt.

In einer weiteren vorteilhaften Ausgestaltung besteht der Einbau aus einem über seine ganze Länge perforierten rohrförmigen Grundkörper und einer gasundurchlässigen Hülse. Die Hülse bildet mit einem von ihr umschlossenen Abschnitt des Grundkörpers dabei den gasundurchlässigen Abschnitt des Einbaus. Die so entstandene rauhe Oberfläche auf der Innenseite des Einbaus begünstigt die Vermischung des angesauten staubfreien Gases mit dem über die Mündung aufgegebenen Treibgas.

Es ist weiterhin von Vorteil, daß der Einbau ein Viertel bis ein Drittel der Länge des Filterelementes in das Filterelement hineinragt. Weiterhin ist es vorteilhaft, daß die lichte Weite des rohrförmigen Einbaus dreiachtel bis fünfachtel der des Filterelementes beträgt. Unter Einhaltung dieser Größenverhältnisse kann die Abreinigungsvorrichtung jeder Filterelementgröße angepaßt werden.

Eine weitere vorteilhafte Ausgestaltung ist darin zu sehen, daß das offene Ende des Ringspaltes zwischen Filterelement und Einbau von einer schalldämmenden gasdurchlässigen Schicht verschlossen ist. Die schalldämmende Schicht reflektiert die in den Ringraum zwischen dem gasdichten Abschnitt des Einbaus und der Innenseite des Filterelementes hineinlaufende Druckwelle so, daß auch während der allerersten Phase der Abreinigung in diesem Bereich kein Unterdruck entsteht. Als schalldämmende Materialien sind beispielsweise Steinwolle, Stahlwolle, Glasfaser und Lochblech mit entsprechender Porösität vorgesehen.

Um die schalldämmende Schicht aus flexiblen Materialien stabil an das offene Ende des Ringspaltes anbringen zu können, ist es von Vorteil, daß die schalldämmende Schicht an ihrer Ober- und/oder Unterseite von einem gasdurchlässigen Tragelement begrenzt ist. Als Tragelement sind beispielsweise ein Lochblech oder eine Sintermaterialscheibe vorgesehen.

Ist an der Vorrichtung als Mündung eine Düse mit einer die Düse begrenzenden runden Düsenplatte mit zentraler runder Düsenöffnung vorgesehen, ist es zur Erreichung der Schallgeschwindigkeit des Treibgasstrahls an der Düsenmündung notwendig, daß der Durchmesser der Düsenplatte mindestens 2,26 mal größer als der Durchmesser der Düsenöffnung ist und die Dicke der Düsenplatte nicht mehr als einviertel des Durchmessers der Düsenöffnung entspricht.

Es ist ebenfalls vorteilhalft, daß der Abstand zwischen der Düsenöffnung und dem offenen Ende des Einbaus das 2 - 3fache des Durchmessers der Düsenöffnung beträgt. Bei Einhaltung dieses Abmaßverhältnisses ist zum einen gewährleistet, daß der Treibgasstrahl mit seinem gesamten Querschnitt in den Einbau eintritt und zum anderen eine größtmögliche Menge staubfreies Gas aus dem freien Raum ansaugt.

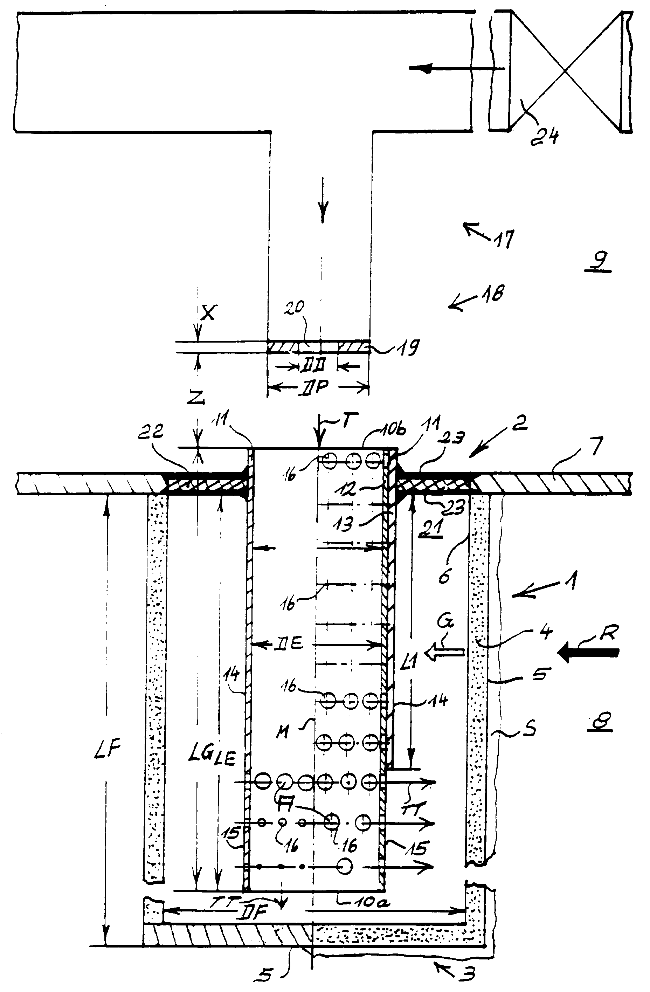

Das erfindungsgemäße Verfahren und zwei Ausführungsformen einer nach diesem Verfahren betreibbaren Vorrichtung sollen anhand der beigefügten Figur näher beschrieben werden, die ein Filterelement mit einer Abreinigungsvorrichtung im Längsschnitt zeigt.

Ein senkrecht ausgerichtetes Filterelement 1 in der Bauform eines Kerzenfilters weist oben ein offenes Ende 2 und unten ein unten geschlossenes Ende 3 auf. Das geschlossene Ende 3 kann , wie links der Mittelachse M dargestellt, gasdicht geschlossen sein, oder, wie rechts der Mittelachse M dargestellt gasdurchlässig geschlossen sein, wobei dann das geschlossene Ende 3 und die Wand 4 aus gasdurchlässigem Filtermaterial sind. Das Filterelement 1 ist an seinem offenen Ende 2 an eine Tragplatte 7 geschweißt, wobei in der Tragplatte 7 eine entsprechende Ausnehmung vorgesehen ist.

Das Filterelement 1 kann in einer in der Figur nicht dargestellten Ausführung an die Tragplatte geflanscht sein, wobei ein Flanschkragen einen oberen Abschnitt der Wand 4 abdeckt, was bei der Auslegung des Filterelements bzw. der Abreinigungsvorrichtung zu berücksichtigen ist.

Das Filterelement 1 ist Teil eines in der Figur nicht vollständig dargestellten Filters, bei dem in einem Filtergehäuse an der einen Rohgasraum 8 von einem Reingasraum 9 trennenden Tragplatte 7 eine Vielzahl Filterelemente 1 parallel zu einer Filterelementgruppe zusammengefaßt sind.

Im Inneren des Filterelementes 1 ist ein an beiden Enden 10a, 10b offener rohrartiger Einbau 11 koaxial zum Filterelement 1 angebracht. Der Einbau 11 ragt eine vorgegebene Strecke LE, die ein Viertel bis ein Drittel der Länge LF des Filterelementes 1 beträgt in das Filterelement 1 hinein. Der lichte Durchmesser DE des Einbaus 11 beträgt ungefähr die Hälfte des lichten Durchmessers DF des Filterelementes 1.

Der Einbau 11 besteht, wie rechts der Mittelachse M in der FIG. dargestellt, aus einem rohrförmigen Grundkörper 12, dessen Mantel über seine gesamten Länge LG perforiert ist. Auf dem Grundkörper 12 ist eine dünnwandige Hülse 13 angebracht, die den Grundkörper 12 ausgehend vom offenen Ende 10b des Einbaus 11 in das Filterelement 1 über einen Abschnitt 14 gasdicht abschließt. Die Lämge L1 des gasdicht abgeschlossenen Abschnitts 14 innerhalb des Filterelementes 1 beträgt dabei zwei - dreimal dem lichten Durchmesser DE des Grundkörpers 12. Es ist vorgesehen, den Grundkörper 12 aus Lochblech herzustellen.

Bei einteiliger Ausführung des Einbaus 11, wie links der Mittelachse M dargestellt, ist es vorgesehen, diesen aus einem Rohr 11 mit entsprechender Perforierung herzustellen, wobei die Öffnungen 16 rund- oder schlitzförmig sein können und durch Bohren, Fräsen oder Stanzen hergestellt werden.

Der Einbau 11 kann, wie in der Figur dargestellt, zusätzlich aus dem Filterelement 1 herausragen oder nach einer anderen nicht dargestellten Ausführungsform mit dem offenen Ende 2 des Filterelementes 1 abschließen.

Die aus dem Mantel des Grundkörpers 12 perforierte Fläche A nimmt längs des verbleibenden nicht gasdurchlässigen zweiten Abschnitts 15 zu seinem Ende 10a ab. Wie rechts der Mittelachse M des Filterelementes 1 gemäß der FIG. dargestellt, nimmt die aus dem Mantel perforierte Fläche A dadurch ab, daß in Umfangsrichtung gleichmäßig verteilte gleichgroße Öffnungen 16 in ihrer Anzahl zum Ende 10a abnehmen oder, wie links der Mittelachse gezeigt, die Öffnungen 16 zum Ende 10a stetig kleiner werden, wobei die Anzahl der Öffnungen 16 in Umfangsrichtung gleich bleiben.

In einem freien Raum 9 vor dem offenen Ende 2 des Filterelementes 1, der im weiteren als Reingasraum 9 bezeichnet wird, ist eine Treibgasstrahleinrichtung 17 mit einer auf das offene Ende 2 des Filterelementes 1 gerichteten Mündung 18 in Form einer Düse 18 mit einer stirnseitig abschließenden Düsenplatte 19 und einer zentral in ihr eingebrachten Düsenöffnung 20 angebracht. Der Durchmesser DP des von einem Treibgas anströmbare Querschnitts der Düsenplatte 19 ist mindestens um den Faktor 2,26 größer als der Durchmesser DB der Düsenöffnung 20. Die Dicke der Düsenplatte 19 mißt dabei weniger als einviertel des Durchmessers DP der Düsenöffnung 20. Die Düse 18 ist koaxial zum Filterelement 1 und in einem Abstand Z, der 2 - 3mal so groß ist, wie der Durchmesser DD der Düsenöffnung 20, zum offenen Ende 10b des rohrförmigen Einbaus 11 angeordnet.

Bei Filterbetrieb wird jedes Filterelement 1 von außen nach innen durchströmt, wobei Staub aus einem Rohgasstrom R überwiegend jeweils auf der Außenseite 5 des Filterelementes abgeschieden wird und in einer Staubschicht S an der Außenseite 5 anhaftet. Feinere Staubpartikel dringen in das Filterelement 1 ein. Das vom Staub S gereinigte Rohgas R strömt als Reingas G aus der Innenseite 6 des Filterelementes 1 durch das offene Ende 2 des Filterelementes 1 und durch das offene Ende 10b des Einbaus 11 in den Reingasraum 9.

Zur Abreinigung der Staubschicht S von der Außenseite 5 des Filterelements 1 wird durch das oben offene Ende 10b des Einbaus 11 ein von der Düse 18 ausgehender Treibgasstrahl T in das Filterelement 1 aufgegeben. Der Impuls des Treibgasstrahls T wirkt auf die Innenseite 6 des Filterelementes und ist so groß, daß die Kohäsions- und Adhäsionskräfte zwischen den einzelnen die Staubschicht S bildenden Staubpartikeln bzw. der Staubschicht S und der Außenseite 5 des Filterelementes überwunden werden, so daß der Staub S vom Filterelement 1 abgereinigt wird.

Der Treibgasstrahl T saugt vor und wärend der Eintritts in den Einbau 11 aus dem Reingasraum 9 Reingas G an und wird nach Eintritt in das Filterelement 1 innerhalb des Einbaus 11 zunächst über eine vorgegebenen Strecke LE geführt, wobei der gasundurchlässige Abschnitt 14 mit der Länge L1 den Treibgasstrahl T davon abhält, aus dem Filterelement 1 Gas auszusaugen, womit ein Unterdruck an der Innenseite 6 des Filterelementes 1 und die damit verbundenen Nachteile während der Abreinigung vermieden werden. Zum anderen werden die vom Treiggasstrahl T angesaugten Reingase G innerhalb des gasundurchlässigen Abschnitts 14 intensiv mit dem Treibgas vermischt. Nach der Vermischung legt sich der Treibgasstrahl T unter Ausbildung einer turbulenten Rohrströmung an die Innenseite des Einbaus 11 an.

Für den Betrieb von Filtern und deren Filterelemente 1 mit heißem Rohgas R bzw. Reingas G und kalten Treibgasen für die Abreinigung ist es von Bedeutung, eine Mischung aus Reingas G und Treibgas mit einer Mischtemperatur bereitzustellen, wobei die Mischtemperatur höher ist als die Temperatur des ursprünglichen Treibgases, um so eine Thermoschockbeanspruchung des Filterelementes 1 bei seiner Abreinigung weitgehend zu vermeiden.

Ist der Abstand Z zwischen der Düse 18 und dem Einbau 11 2 - 3mal dem Durchmesser DD Düsenöffnung 20 wird die größtmögliche Menge Reingas G eingemischt.

Der an den gasundurchlässigen Abschnitt 14 anschließende perforierte Abschnitt 15 wirkt als Diffusor, in dem die Strömung auf eine Vielzahl auf die Innenseite 6 des Filterelementes 1 gerichtete Teilströme TT verteilt wird, wobei der statische Druck im Inneren des Filterelementes 1 auf den zur Abreinigung erforderlichen Wert ansteigt.

Ein zwischen der Filterelementwand 4 und dem Einbau 11 gebildeter Ringspalt 21 ist an seinem oben offenen Ende von einer schalldämmenden Schicht 22 verschlossen. Die schalldämmende Schicht 22 ist für den Fall des heißen Betriebes beispielsweise aus Steinwolle, Stahlwolle oder Glasfaser. An den Unter- und Oberseiten der Schicht 22 sind Tragbleche 23 aus Lochblech angebracht. Anstatt des Lochbleches kann auch eine gasdurchlässige Sintermaterialplatte angebracht sein. Die Tragbleche 23 sind fest mit dem Einbau 11 und der Tragplatte 7 verschweißt und wirken somit auch als Halterung für den Einbau 11.

Die das oben offene Ende 2 des Ringspaltes 21 abschließende schalldämmende Schicht 22 bewirkt, daß die durch den Treibgasstrahl T aufgebrachte Druckwelle so reflektiert wird, daß auch während der allerersten Phase der Abreinigung an der Innenseite 6 des Filterelementes 1 kein Unterdruck entsteht.

Die Reinigungswirkung kann dadurch zusätzlich verbessert werden, daß der Strahl T bei überkritischem Druckverhältnis zwischen Düsenvordruck und Druck im Reingasraum 9 die Düsenöffnung 20 mit Überschallgeschwindigkeit, d. h. bei gleichem Öffnungsquerschnitt mit größerem Impuls (Impulsstrom = Massenstrom x Geschwindigkeit) verläßt. Die Überschallgeschwindigkeit wird durch Einschnürung des sich bildenden Strahls T beim Verhältnis von DP/DD > 2,26 und einem Verhältnis von X/DD < 0,25 erreicht. Der Strahlrand des Treibgasstrahls bildet sich dabei im Bereich der Düsenöffnung lavalartig aus.

Zur Erzeugung des Treibgasstrahlspulses ist in die Strahleinrichtung 17 vor der Düse 18 ein schnell schließendes und öffnendes Absperrorgan 24, wie beispielsweise ein Magnetventil eingebunden. Bei genügend schneller Öffnung dieses Magnetventils stellt sich während der ersten 20 - 30 1/1000 Sek. eines Pulses bei genügend schneller Öffnung eine Gasgeschwindigkeit ein, die nahezu den doppelten Wert der Schallgeschwindigkeit erreicht.

Der Durchmesser DD der Düsenöffnung 20 ist auf das sich aus der Länge LF und dem Durchmesser DF des Filterelementes 1 ergebende Volumen abzustimmen, und beträgt beispielsweise bei einem Filterelement 1 mit einer Länge LF von rund 3.000 mm und einem Durchmesser DF von 150 mm etwa DD = 15 mm.

Die angegebenen Abmaßverhältnisse der aufgeführten Bauteile sind Richtwerte und im einzelnen von der Anordnung und Größe der Düse oder Mündung zur Strahlerzeugung relativ zum Filterelement vom Strahlimpuls und von der Durchlässigkeit des Filtermaterials abhängig.

## Patentansprüche

1. Verfahren zur Abreinigung von Staub von der Außenseite mindestens eines hohlen länglichen Filterelementes mit einem zu einem freien Raum offenen Ende und einem geschlossenen Ende, mit dem staubhaltiges Gas entstaubt wird, wobei das für das Gas durchlässige Filterelement von außen nach innen von dem Gas durchströmt wird und der Staub auf der Außenseite des Filterelementes abgelagert wird und der abgelagerte Staub durch einen auf die Innenseite des Filterelementes aufgebrachten Gasimpuls eines durch das offene Ende des Filterelementes eingebrachten Treibgasstrahls abgereinigt wird, der von einer in dem freien Raum angeordneten Treibstrahleinrichtung mit einer auf das offene Ende des Filterelementes ausgerichteten Mündung ausgeht, und wobei vom Treibgasstrahl staubfreies Gas aus dem freien Raum angesaugt wird,
**dadurch gekennzeichnet,**
daß der Treibgasstrahl mit dem angesaugten staubfreien Gas nach Eintritt in das Filterelement mittels eines in das offene Ende des Filterelementes hineinragenden rohrartigen Einbaus zunächst über eine vorgegebene Strecke geführt und danach in eine Vielzahl auf die Innenseite des Filterelementes gerichtete Teilströme aufgeteilt wird.

2. Verfahren nach Anspruch 1,
**dadurch gekennzeichnet,**
daß die Mündungsaustrittsgeschwindigkeit des Treibgasstrahls mindestens den Wert der Schallgeschwindigkeit erreicht.

3. Verfahren nach Anspruch 1 oder 2,
**dadurch gekennzeichnet,**
daß ein pulsierender Treibgasstrahl aufgegeben wird.

4. Verfahren nach mindestens einen der Ansprüche 1 - 3,
**dadurch gekennzeichnet,**
daß die vom Gasimpuls ausgehende Druckwelle im Inneren des Filterelementes mittels einer das offene Ende des Filterelementes zumindest teilweise abschließenden Schicht reflektiert wird.

5. Vorrichtung zur Abreinigung von Staub von der Außenseite mindestens eines hohlen länglichen Filterelementes mit einem offenen und einem geschlossenen Ende und einer gasdurchlässigen Filterelementwand mit mindestens einer in einem freien Raum vor dem offenen Ende angeordneten Treibgasstrahleinrichtung mit einer auf das offene Ende gerichteten und koaxial zur Filterelementwand ausgerichteten Mündung,
**dadurch gekennzeichnet,**
daß ein an beiden Enden (10a, 10b) offener rohrartiger Einbau (11) in das offene Ende (2) des Filterelementes (1) hineinragend und koaxial in einem Abstand zur Filterelementwand (4) angeordnet ist, wobei der Einbau (11) ausgehend von seinem der Mündung (18) zugewandten Ende (10b) längs eines ersten Abschnitts (14) gasdicht geschlossen ist und längs eines daran anschließenden zweiten Abschnitts (15) perforiert ist.

6. Vorrichtung nach Anspruch 5,
**dadurch gekennzeichnet,**
daß der gasdicht geschlossene Abschnitt (14) des Einbaus (11) zwei - dreimal so lang ist wie dessen lichte Weite (DE).

7. Vorrichtung nach Anspruch 5 oder 6
**dadurch gekennzeichnet,**
daß längs des perforierten Abschnitts (15) die perforierte Fläche (A) zu dessen freien Ende (10a) abnimmt.

8. Vorrichtung nach mindestens einem der Ansprüche 5 - 7,
**dadurch gekennzeichnet,**
daß der Einbau (11) aus einem über seine ganze Länge LE perforierten rohrförmigen Grundkörper (12) und einer gasundurchlässigen Hülse (13) besteht.

9. Vorrichtung nach mindestens einem der Ansprüche 5 - 8 ,
**dadurch gekennzeichnet,**
daß der Einbau (11) einviertel bis eindrittel der Länge (LF) des Filterelementes (1) in das Filterelement (1) hineinragt.

10. Vorrichtung nach mindestens einem der Ansprüche 5 - 9,
**dadurch gekennzeichnet,**
daß die lichte Weite (DE) des rohrförmigen Einbaus (11) dreiachtel bis fünfachtel der des Filterelementes (1) beträgt.

11. Vorrichtung nach mindestens einem der Ansprüche 5 - 10,
**dadurch gekennzeichnet,**
daß das offene Ende (2) des Ringspaltes (21) zwischen Filterelement (1) und Einbau (11) von einer schalldämmenden gasdurchlässigen Schicht (22) verschlossen ist.

12. Vorrichtung nach mindestens einem der Ansprüche 5 - 11,
**dadurch gekennzeichnet,**
daß die schalldämmende Schicht (22) an ihrer Ober- und/oder Unterseite von einem gasdurchlässigen Tragelement (23) begrenzt ist.

13. Vorrichtung bei der die Mündung eine Düse mit einer die Düse stirnseitig begrenzenden runden Düsenplatte mit zentraler runder Düsenöffnung ist, nach mindestens einem der Ansprüche 5 - 12,
**dadurch gekennzeichnet,**
daß der Durchmesser (DP) der Düsenplatte (19) mindestens 2,26 mal größer als der Durchmesser (DD) der Düsenöffnung (20) ist und die Dicke (X) der Düsenplatte (19) nicht mehr als einviertel des Durchmessers (DD) der Düsenöffnung entspricht.

14. Vorrichtung nach mindestens einen der Ansprüche 5 - 13,
**dadurch gekennzeichnet,**
daß der Abstand (Z) zwischen der Düsenöffnung (20) und dem offenen Ende (10b) des Einbaus (11) das 2 - 3fache des Durchmessers (DD) der Düsenöffnung (20) beträgt.
